# FASCICULE DE BREVET EUROPEEN

(11) **EP 3 240 371 B1**
(45) Date de publication et mention de la délivrance du brevet: **26.01.2022**
(21) Numéro de dépôt: 17168449.1
(22) Date de dépôt: 27.04.2017
(51) Int. Cl.: H05H 7/18, B01J 3/03

(54) **COMPOSANT D'ASSEMBLAGE D'UNE ENCEINTE A VIDE ET PROCEDE DE REALISATION DU COMPOSANT D'ASSEMBLAGE**
BAUTEIL ZUM ZUSAMMENBAU EINES VAKUUM-BEHÄLTERS, UND VERFAHREN ZUR HERSTELLUNG DIESES BAUTEILS FÜR DEN ZUSAMMENBAU
COMPONENT FOR ASSEMBLING A VACUUM CHAMBER AND METHOD FOR FORMING THE ASSEMBLY COMPONENT

(30) Priorité: 28.04.2016 FR 1653829
(43) Date de publication de la demande: 01.11.2017
(73) Titulaire: Commissariat à l'Energie Atomique et aux Energies Alternatives, 75015 Paris (FR)
(72) Inventeur: TOUSSAINT, Patrice, 50530 DRAGEY (FR)
(74) Mandataire: Marks & Clerk France

(56) Documents cités:
- WO-A1-2015/033073
- JP-A- H04 254 577
- US-A- 4 799 692
- HAJIME ISHIMARU: "Bakable aluminium vacuum chamber and bellows with an aluminum flange and metal seal for ultrahigh vacuum", JOURNAL OF VACUUM SCIENCE AND TECHNOLOGY, vol. 15, no. 6, 1 novembre 1978 (1978-11-01), page 1853, XP055310151, US ISSN: 0022-5355, DOI: 10.1116/1.569853

## Description

L'invention concerne les enceintes à vide et plus précisément l'assemblage d'éléments d'enveloppe utilisés dans les enceintes à vide. L'invention trouve une utilité particulière dans un accélérateur de particule dans lequel on réalise un vide poussé. L'invention n'est pas limitée à cette utilisation et peut être mise en œuvre dans tout type d'enceinte à vide. On les utilise par exemple pour des lasers de puissance et pour des simulateurs spatiaux.

Dans un accélérateur de particule, il est courant de réaliser des tests d'étanchéité à l'hélium pour atteindre des valeurs de l'ordre de 10⁻¹⁰Pa.m³/s. En plus d'une telle étanchéité, l'enceinte est réalisée dans des matériaux dégazant le moins possible pour éviter de perturber les expériences réalisées dans l'accélérateur.

Les enceintes à vides ne peuvent pas être réalisées dans des pièces mécaniques monoblocs et des assemblages sont nécessaires. Ces assemblages doivent être démontables afin de permettre à des opérateurs d'intervenir à l'intérieur des enceintes et de permettre la connexion d'équipements comme des pompes à vide ou des capteurs de mesure.

Une solution connue pour réaliser un assemblage utilisable dans une enceinte à vide consiste à brider deux éléments mécaniques à assembler. Plus précisément, Les éléments à assembler possèdent des faces complémentaires entre lesquelles un joint d'étanchéité est pressé. Pour éviter le dégazage possible du joint il est préférable d'utiliser un joint métallique, dont le taux de dégazage est de l'ordre de cent fois inférieur à celui des joints élastomères.

Afin de ne pas détériorer les surfaces entre lesquelles les joints sont pressés, la dureté des joints doit être plus faible que celle des surfaces en regard. On peut par exemple réaliser les éléments d'enveloppe des enceintes en acier inoxydable, notamment des aciers connus sous leur désignation normalisée de type 304L selon la norme américaine AISI ou 1.4306 selon la norme européenne EN 10027 ou encore de type 316L (norme américaine) ou 1.4404 (norme européenne). Ces aciers sont notamment connus pour leur excellentes aptitudes au soudage ce qui facilite l'assemblage des enceintes. Des joints classiques mis en place entre des surfaces réalisées dans de tels aciers sont en alliage de cuivre ou d'aluminium.

Il peut être nécessaire, notamment pour des contraintes de poids, de réaliser les éléments d'enveloppe des enceintes en métaux plus léger, notamment en alliage d'aluminium. Un exemple est donné dans un article de de HAJIME ISHIMARU : « Bakable aluminium vacuum chamber and bellows with an aluminium flange and metal seal for ultrahigh vacuum » pubilé dans le JOURNAL OF VACUUM SCIENCE AND TECHNOLOGY Vol 15 n° 6 page 1853. Certains alliages d'aluminium présentent d'ailleurs beaucoup d'avantages pour la réalisation d'enceintes à vide, comme leur faible taux de dégazage, leur coût, leur facilité d'usinage, leur perméabilité magnétique, leur faible activation par les neutrons, une bien moindre perméation à l'hydrogène que l'acier inoxydable, leur conductivité thermique permettant d'étuver plus facilement les chambres à vide et de dissiper les apports de chaleur sans refroidissement ajouté...

Certains alliages contenant du zinc sont à éviter car leur tension de vapeur n'est pas compatible avec l'ultravide nécessaire dans un accélérateur de particule. Bien que l'aptitude au soudage des alliages d'aluminium soit généralement moins bonne que celle des aciers inoxydables, certains alliages dans la série normalisée 1000, 5000 et 6000 selon la norme européenne EN 485-2 ont de très bonnes aptitudes au soudage.

Afin de permettre la mise en place de joints d'étanchéité métalliques entre surfaces d'assemblage, une société américaine : Atlas Technologies, dont le siège social est située 3100 Copper Avenue à Fenton dans l'état du Michigan a développé des brides en aluminium recouverte d'une surface en acier inoxydable. La partie aluminium de la bride peut être soudée sur un élément d'enveloppe d'une enceinte à vide et la surface en acier inoxydable permet d'écraser un joint métallique comme par exemple un joint en cuivre. Les brides de cette société sont largement utilisées dans des accélérateurs de particules de renom, notamment celui du CERN situé à proximité de Genève en Suisse.

La demanderesse a constaté des difficultés de mise en œuvre de ces brides conduisant à un taux de rebus de l'ordre de 20% notamment du à l'apparition de fuites à la jonction inox / aluminium. Ces brides sont assemblées sur les éléments d'enveloppe des enceintes à vide par soudage par fusion, ce qui implique également des risques de porosité dans les soudures. Un autre frein à l'utilisation de ces brides est leur prix élevé.

L'invention vise à pallier tout ou partie des problèmes cités plus haut en proposant une bride en alliage d'aluminium que l'on peut assembler par soudage sur un élément d'enveloppe également en alliage d'aluminium. La bride selon l'invention présente une dureté suffisante permettant d'écraser un joint déformable. Il est possible de mettre en œuvre un joint métallique monobloc, comme par exemple un joint en cuivre, aluminium, ou autre. Un joint comprenant une enveloppe métallique et un élément élastique interne ou encore un joint élastomère peut également être utilisé. Un but de l'invention est d'éviter le recours à un dépôt d'acier inoxydable évitant ainsi la jonction entre acier inoxydable et aluminium. Un exemple général de dépôt de nickel par vaporation sur une surface en aluminium est donné dans le document JP H04 254577 A.

A cet effet, l'invention a pour objet un procédé de réalisation d' un composant d'assemblage d'une enceinte à vide selon la revendication 1 et un composant d'assemblage selon la revendication 4.

D'autres modes de réalisation avantageux sont décrits dans les revendications dépendantes.

L'invention sera mieux comprise et d'autres avantages apparaîtront à la lecture de la description détaillée d'un mode de réalisation donné à titre d'exemple, description illustrée par le dessin joint dans lequel :
la figure 1 représente en coupe un premier mode de réalisation d'un composant d'assemblage mettant en œuvre l'invention ;
les figures 2a et 2b représentent en coupe partielle un corps et une bride formant une fois assemblés le composant de la figure 1 ;
les figures 3a et 3b illustrent un procédé d'assemblage du corps et de la bride ;
la figure 3c illustre une variante du procédé d'assemblage du corps et de la bride ;
les figures 4a et 4b représentent en coupe partielle l'assemblage de deux composants tels que représentés sur la figure 1 ;
les figures 5a, 5b et 5c représentent en perspective et en coupe un second mode de réalisation de composant monobloc mettant en œuvre un mode de réalisation ne faisant pas partie de l'invention.

Par souci de clarté, les mêmes éléments porteront les mêmes repères dans les différentes figures.

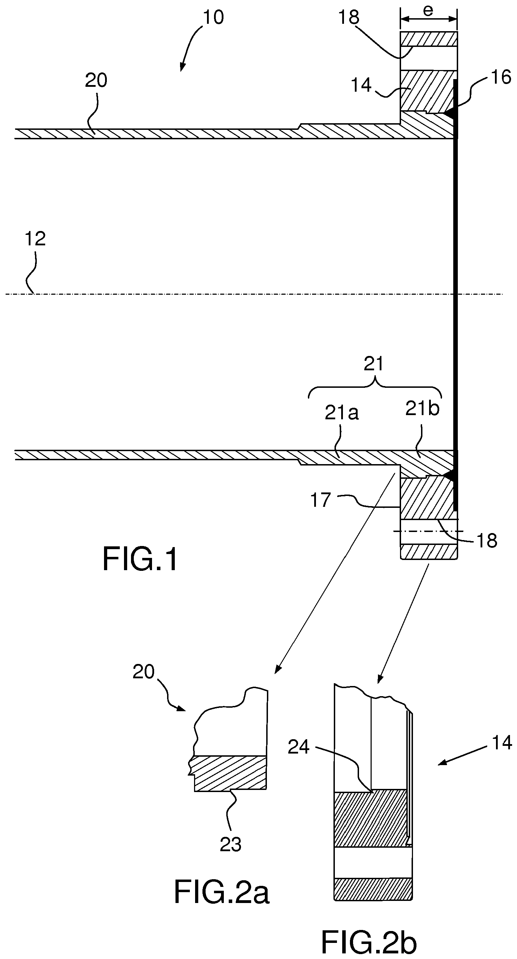

La figure 1 représente un composant d'assemblage mécanique 10 de forme tubulaire en coupe par son axe longitudinal 12. Le composant 10 forme un élément d'enveloppe d'une enceinte à vide destiné à être assemblé de façon étanche à un autre élément d'enveloppe. L'assemblage est réalisé au moyen d'une bride 14 comprenant une surface plane 16 qui est par exemple perpendiculaire à l'axe 12. La bride 14 possède par exemple une forme de rondelle plane s'étendant essentiellement perpendiculairement à l'axe 12 entre la surface plane 16 et une autre surface 17 parallèle à la surface 16. La bride 14 comprend plusieurs perçages 18 parallèles à l'axe 12. Les perçages 18 sont répartis autour de l'axe 12. L'autre élément d'enveloppe, non représenté, à assembler à l'élément 10, possède une autre bride symétrique de la bride 14 par rapport à la surface 16. Un joint d'étanchéité est destiné à être pressé entre la surface 16 de la bride 14 et l'autre bride. Le pressage est assuré par des boulons traversant les perçages 18 et des perçages similaires de l'autre bride. Le joint est avantageusement un joint métallique, par exemple en cuivre, qui se déforme lors du pressage des deux brides l'une contre l'autre. De façon plus générale, tout joint déformable dont la dureté est inférieure à celle de la surface 16 peut être mis en œuvre. Le choix du joint dépend principalement de l'utilisation de l'enceinte à vide. Par exemple, pour un accélérateur de particules, les joints métalliques sont à préférer à cause d'un risque de dégazage inférieur à celui d'un joint élastomère. La déformation du joint assure l'étanchéité de l'assemblage au niveau des brides. La surface 16 forme avantageusement le fond d'un lamage d'axe 12. Le lamage permet de maintenir le joint d'étanchéité en place avant son pressage. La surface 16 s'étend principalement perpendiculairement à l'axe 12. Il est possible de réaliser dans la surface 16 des couteaux proéminents par rapport à un plan perpendiculaire à l'axe 12. Ces couteaux viennent pénétrer le joint pour améliorer l'étanchéité de l'assemblage. La déformation du joint vient remplir les imperfections des couteaux.

Le composant d'assemblage 10 représenté comprend un corps 20 tubulaire s'étendant autour de l'axe 12. Le corps 20 s'étend selon l'axe 12, sensiblement à partir de la surface plane 16 au-delà d'une épaisseur e de la bride 14 selon l'axe 12. Autrement dit, la surface 16 forme une extrémité du composant 10 selon l'axe 12. Le composant 10 s'étend selon l'axe 12 à partir de cette extrémité. L'épaisseur e de la bride 14 est définie entre les surfaces 16 et 17. Le corps 20 s'étend au-delà de la surface 17. Les enceintes à vide mises en œuvre dans un accélérateur de particules sont utilisées pour y véhiculer un faisceau de particules se déplaçant selon l'axe 12 du tube d'où la forme tubulaire du corps 20. L'invention n'est pas limitée à cette configuration et peut être mise en œuvre pour toute autre forme de composant d'enveloppe d'une enceinte à vide, composant au niveau duquel un assemblage par bride est à réaliser.

Selon l'invention la surface 16 est recouverte d'un dépôt métallique comprenant majoritairement du nickel. Ce dépôt permet d'augmenter la dureté de la surface 16.

Le dépôt de nickel peut être réalisé de façon électrolytique. Néanmoins on a constaté que ce procédé de dépôt manquait d'homogénéité dans l'épaisseur du dépôt notamment lorsque la surface 16 n'est pas rigoureusement plane, par exemple lorsque des couteaux y sont réalisés. En effet, un dépôt électrolytique tend à être plus important dès qu'une rupture de forme apparait du fait d'un effet de pointe. Un dépôt chimique de nickel est donc préférable car plus régulier en épaisseur. Ce type de dépôt d'alliage de nickel peut se faire en milieu aqueux. On peut par exemple déposer un alliage de nickel comprenant de l'ordre de 10% en masse de phosphore. Dans certaines utilisations de l'enceinte à vide, il est préférable que le dépôt soit amagnétique. Une proportion de phosphore compris entre 9% et 12% permet d'obtenir cette propriété.

L'épaisseur de la couche d'alliage de nickel est choisie en fonction de la dureté souhaitée pour la surface 16. La présence de phosphore tend à réduire la dureté de la couche. Pour déformer un joint en cuivre ou autre, avec une proportion de phosphore de l'ordre de 10%, une épaisseur supérieure à 10µm est suffisante. Avantageusement, une épaisseur supérieure à 30µm apporte une bonne étanchéité du revêtement en alliage de nickel. Cette étanchéité est utile du fait de la différence de couple galvanique entre l'aluminium le nickel et le cuivre risquant d'entrainer un risque d'oxydation de l'aluminium en cas de porosité de la couche d'alliage de nickel.

Des essais en interne sur une couche d'alliage de nickel de 30µm ont montré une dureté Vickers mesurée selon la norme EN-ISO 6507-1 comprise entre 23 et 27 HRC. Des essais comparables sur une bride réalisée en acier inoxydable de type 316L ont donné des valeurs comprises entre 22 et 30 HRC. Ceci montre bien qu'un dépôt métallique comprenant majoritairement du nickel fait sur une bride en alliage d'aluminium permet d'obtenir une dureté comparable à celle d'une bride réalisée en acier inoxydable massif.

Afin d'améliorer la reprise, vers le corps 20, d'efforts encaissés par la bride 14, il est possible d'augmenter l'épaisseur du corps 20 au niveau de sa jonction avec la bride 14. Plus précisément, le corps 20 peut s'étendre le long de l'axe 12 avec une section intérieure constante au voisinage de la bride 14. A proximité de la bride 14, le corps 20 peut comprendre une surépaisseur 21 disposée de façon à augmenter sa section extérieure sans modifier la section intérieure.

Comme on l'a évoqué plus haut, il est avantageux de réaliser le corps 20 et la bride 14 en alliage d'aluminium. Dans le premier mode de réalisation, le corps 20 et la bride 14 sont réalisés séparément et assemblés par soudage. Dans le cas d'un assemblage soudé, il est préférable que le corps 20 et la bride 14 soient réalisés dans le même alliage ou dans des alliages de composition voisine afin d'améliorer l'homogénéité du cordon de soudure.

La surépaisseur 21 permet de faciliter la réalisation de l'assemblage par soudage. La surépaisseur 21 peut comprendre deux parties 21a et 21b. La partie 21b s'étend dans le prolongement de la bride 14 entre les surfaces 16 et 17. La partie 21a s'étend au-delà de la bride 14 et de sa surface 17, le long de l'axe 12. La section extérieure de la partie 21b est plus grande que la section extérieure de la partie 21a.

Les figures 2a et 2b représentent respectivement le corps 20 et la bride 14 avant leur assemblage et à distance l'un de l'autre.

La surface 16 peut s'étendre à la fois sur la bride 14 et sur le corps 20. Afin d'assurer un positionnement reproductible de la bride 14 sur le corps 20, par exemple pour assurer l'alignement des deux parties de la surface 16 l'une appartenant au corps et l'autre à la bride 14, il est possible de réaliser un épaulement 23 dans le corps 20 sur lequel vient prendre appui une face correspondante 24 de la bride 14.

Le soudage de la bride 14 et du corps 20 peut être réalisé par fusion locale de la bride 14 et du corps 20. Pour l'aluminium, on peut notamment utiliser un procédé de soudage à l'arc avec une électrode non fusible sous atmosphère de gaz neutre connu dans la littérature anglo-saxonne sous l'acronyme TIG pour « Tungsten Inert Gas ». Ce procédé impose des alliages d'aluminium spécifiquement adaptés au soudage. Ces alliages ont généralement des caractéristiques mécaniques plus faibles que d'autres. De plus, le soudage par fusion entraine des déformations des pièces soudées et des porosités qui peuvent être préjudiciables à la réalisation d'une enceinte à vide

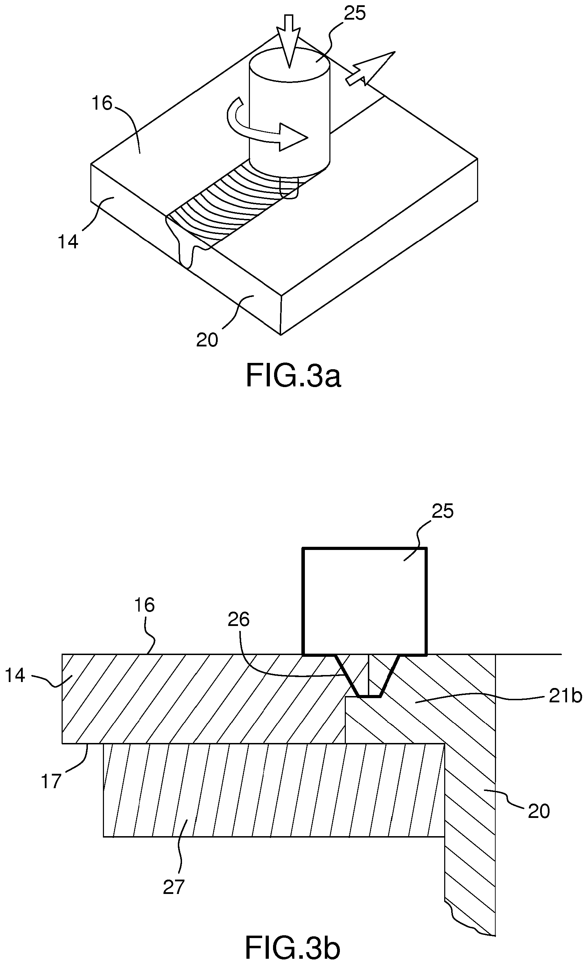

Pour pallier ces inconvénients, la bride 14 et le corps 20 sont avantageusement soudés par friction malaxage. Ce procédé de soudage, illustré à l'aide des figures 3a et 3b, consiste à assembler la bride 14 et le corps 20 en les amenant dans un état pâteux grâce à un pion 25 en rotation. Le soudage par friction malaxage permet d'assembler des alliages d'aluminium différents non soudable par fusion et sans déformation. Il est possible de mettre en œuvre pour la bride un alliage d'aluminium ayant de meilleures caractéristiques mécaniques que celle d'un alliage d'aluminium élaboré pour le soudage. Il est bien entendu possible d'assembler une bride en alliage non élaboré pour le soudage sur un corps qui, quant à lui est prévu pour le soudage afin d'y rapporter par soudage d'autres partie de l'enceinte à vide.

La figure 3a représente en perspective le pion 25 en rotation sur la surface 16 à l'interface entre la bride 14 et le corps 20. La figure 3b représente en coupe l'opération de soudage par friction malaxage. Le pion 25 comprend un doigt conique 26 destiné à pénétrer dans la matière à l'interface entre les deux pièces à souder. En début d'opération, le doigt 26 est appuyé sur la surface 16. Durant l'opération de soudage, une enclume 27 est disposée sous la bride 14 à en appui contre la surface 17 pour reprendre l'effort exercé par le pion 25. Lorsque la partie 21b de la surépaisseur 21 est présente, l'enclume 27 prend appui à la fois sur la bride 14 et sur le corps 20 par sa partie 21b.

La rotation du pion 25 génère un échauffement de la surface 16 dont le matériau devient pâteux. Le ramollissement des pièces à souder permet au doigt 26 de pénétrer dans l'interface entre la bride 14 et le corps 20. Le pion 26 parcourt l'ensemble de l'interface pour effectuer le soudage complet. Des essais concluants ont été réalisés avec une vitesse de rotation du pion 25 de 1100 tr/min, un effort de 6 à 8 kN et une avance de 400 mm/min. Différents matériaux ont été testés, par exemple une bride 14 et un corps 20, tous deux en alliage d'aluminium de type 6083. Pour mémoire, les références des alliages d'aluminium sot issus de la norme européenne EN 485-2. Un autre essai concluant a été réalisé avec des alliages différents, par exemple un alliage 6083 pour le corps 20 et un alliage 2017 pour la bride 14. Les alliages de la série 6000 (alliages d'aluminium contenant du magnésium et du silicium) sont connus pour leur aptitude à la déformation. Ils sont bien adaptés pour réaliser des profilés tels que le corps 20 formant un tube s'étendant selon son axe 12. Les alliages de la série 2000 (alliages d'aluminium contenant du cuivre) sont connus pour leur aptitude à l'usinage, ce qui facilite la fabrication de la bride 14. Ils sont aussi connus pour leurs caractéristiques mécaniques, notamment résistance élastique et résistance à la rupture, supérieures à celles des alliages de la série 6000. Le soudage par friction malaxage permet l'assemblage d'alliages d'aluminium de séries différentes, même lorsque ceux-ci ne sont pas spécifiquement conçus pour le soudage. On peut ainsi profiter des propriétés mécaniques utiles pour la réalisation du corps 20 par étirage et les propriétés mécaniques utiles pour la réalisation de la bride 14 par usinage. Il est bien entendu possible de choisir d'autres séries d'alliage d'aluminium en fonction du besoin.

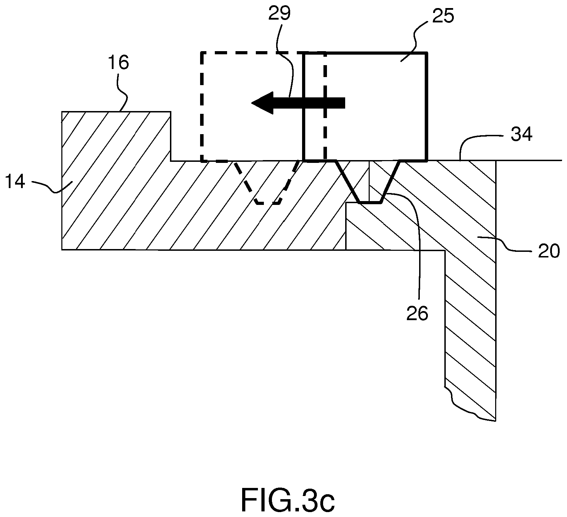

La figure 3c représente une variante de la bride 14 également soudée sur le corps 20. Dans cette variante, le soudage est réalisé dans une zone en retrait 34 par rapport à la surface 16 revêtue du dépôt d'alliage de nickel. Le retrait 34 est notamment utile lorsque le corps 20 et la bride 14 sont soudés par friction malaxage. En effet, lors de la fin de l'opération de soudage, le pion 25 est extrait du composant 10 et peut déformer localement le composant 10. La déformation se situe alors dans la zone en retrait 34 et ne perturbe pas la surface 16. La zone en retrait 34 est avantageusement dépourvue du dépôt d'alliage de nickel afin d'éviter de polluer la soudure. Lors de la fabrication de la bride 14, le dépôt métallique d'alliage de nickel se fait sur toutes les surfaces de la bride 14. Pour éviter que le nickel apparaisse sur la zone en retrait 34, il est possible de réaliser la zone en retrait par enlèvement de matière, par exemple par usinage, après dépôt de nickel.

Alternativement ou en complément, il est possible de réaliser l'opération de soudage puis de ré usiner le corps 20 et la bride 14 au niveau du cordon de soudure pour former la zone en retrait 34.

Lors du soudage par friction malaxage, le pion 25 suit l'interface entre le corps 20 et la bride 14. Lorsque le pion a parcouru l'ensemble de l'interface, il est possible de l'extraire par un mouvement de translation selon l'axe de rotation du pion 25. Des essais en interne ont montré qu'une telle extraction pouvait dégrader la fiabilité de l'étanchéité de la soudure. Pour résoudre ce problème, avant l'extraction du pion 25, on réalise un mouvement de translation du pion 25 parallèlement à la zone 34 lorsqu'elle existe ou parallèlement à la surface 16, afin d'écarter le doigt 26 de l'interface entre la bride 14 et le corps 20 avant de l'extraire. Ce mouvement de translation porte le repère 29 sur la figure 4c. Avant l'extraction du pion, celui-ci est représenté en pointillé. Avantageusement, le mouvement de translation 29 est réalisé en conservant le doigt 26 dans la bride 14 en s'éloignant du corps 20 afin d'éviter toute déformation du corps à l'intérieur de l'enceinte à vide.

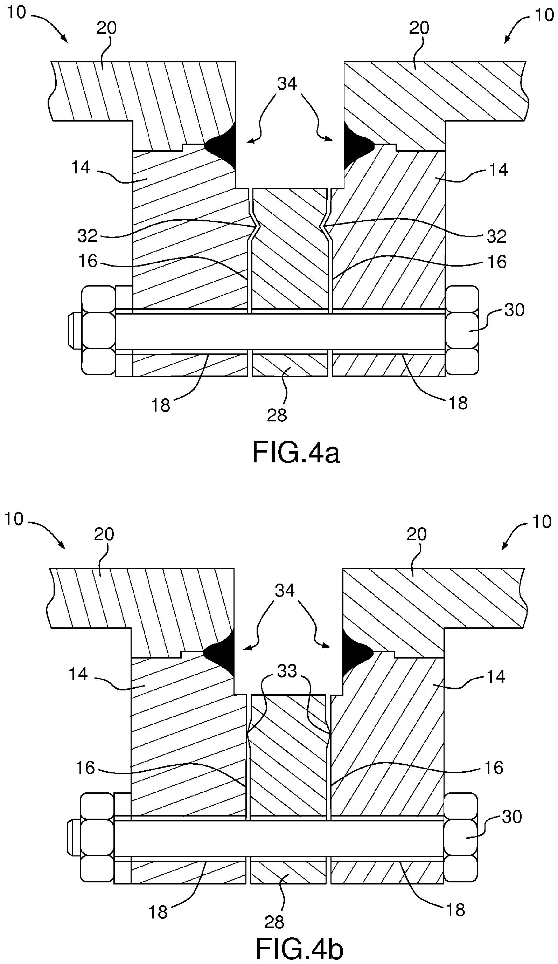

Les figures 4a et 4b représentent deux composants 10 assemblés par leur bride 14. Le joint pressé entre les surfaces 16 des deux brides porte la référence 28 et un boulon d'assemblage, la référence 30. Sur la figure 4a, des couteaux 32, réalisés dans chacune des brides 14, permettent de déformer localement le joint 28. Alternativement sur la figure 4b, les surfaces 16 sont planes et des couteaux 33 sont réalisés dans le joint 28 de façon à être écrasés par les surfaces 16. Les couteaux 32 ou 33 permettent d'augmenter localement la pression dans l'assemblage entre deux brides 14 entre lesquelles un joint 28 est interposé. Cette pression locale améliore l'étanchéité de l'assemblage, ce qui est utile pour la réalisation d'une enceinte à vide.

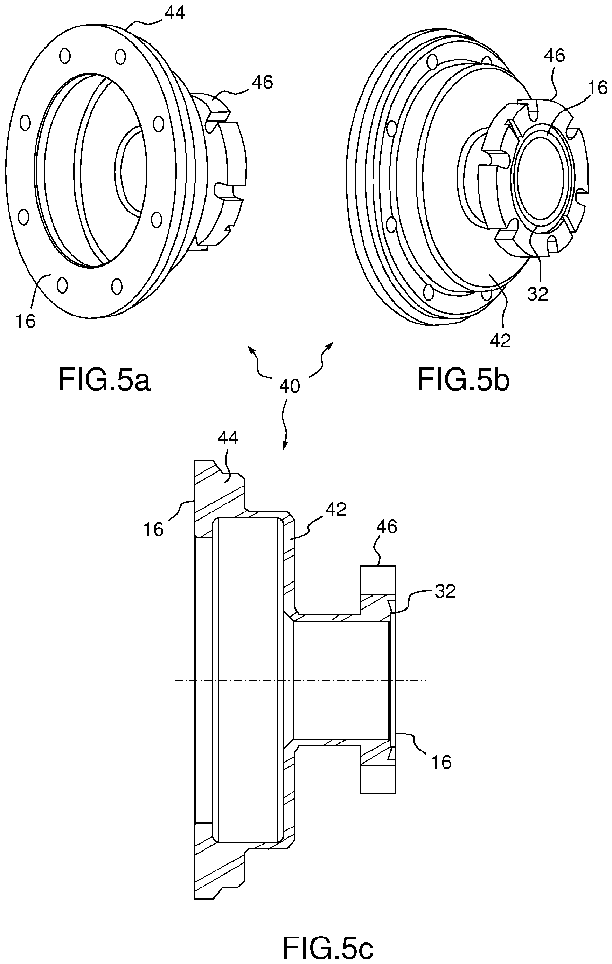

Les figures 5a et 5b représentent en perspective un second mode de réalisation d'un composant d'assemblage 40 ne faisant pas partie de l'invention. La figure 5c représente en coupe le composant 40. A la différence du premier mode de réalisation, le composant d'assemblage 40 est monobloc. On retrouve un corps 42 et deux brides 44 et 46. La surface 16 de la bride 44 est plane comme la bride 14 représentée sur la figure 4b. La bride 46 comprend, quant à elle, un couteau 32 comme la bride 14 représentée sur la figure 4a. Le corps 42 et les deux brides 44 et 46 sont par exemple réalisés par usinage dans un même bloc d'alliage d'aluminium. Comme dans le premier mode de réalisation on retrouve sur chacune des brides 44 et 46, la surface 16 recouverte d'un dépôt métallique comprenant majoritairement du nickel.

## Revendications

1. Procédé de réalisation d'un composant d'assemblage (10) pour enceinte à vide, le composant comprenant un corps (20) et une bride (14), la bride possédant une surface (16) configurée pour presser un joint d'étanchéité (28) contre une autre pièce mécanique (10), la bride (14) ayant une forme de rondelle sensiblement plane s'étendant autour d'un axe (12), la bride étant configurée pour être assemblée sur le corps (20) réalisé dans un alliage d'aluminium de forme tubulaire autour de l'axe (12), le corps (20) s'étendant sensiblement à partir de la surface (16) selon l'axe (12) au-delà d'une épaisseur de la bride (14), la bride (14) étant réalisée dans un alliage d'aluminium, la bride (14) et le corps (20) formant deux pièces mécaniques réalisées séparément et configurées pour être assemblées par soudage, la bride (14) comprenant une zone (34) en retrait par rapport à la surface (16), la zone (34) en retrait permettant le soudage du corps (20) **caractérisé en ce que** la surface (16) est recouverte d'un dépôt métallique comprenant majoritairement du nickel réalisé de façon chimique, la zone en retrait (34) étant réalisée par enlèvement de matière après le dépôt métallique de sorte que la zone (34) en retrait est dépourvue de dépôt métallique.

2. Procédé selon la revendication 1, **caractérisé en ce que** le dépôt métallique comprend du phosphore entre 9% et 12% en masse.

3. Composant d'assemblage (10) d'une enceinte à vide, le composant comprenant un corps (20) et une bride (14 ) **caractérisé en ce que** le corps et la bride sont réalisés selon le procédé de la revendication 1.

4. Composant d'assemblage selon la revendication 3, **caractérisé en ce que** la bride (14) et le corps (20) sont réalisés dans des alliages d'aluminium de références différentes selon la norme européenne EN 485-2.

5. Composant d'assemblage selon l'une des revendications 3 ou 4, **caractérisé en ce que** le corps (20) est un tube à section circulaire s'étendant selon un axe (12), **en ce que** la bride (14) possède une forme de rondelle percée sensiblement au diamètre extérieur du tube (20), et **en ce que** la surface (16) de la bride (14) recouverte du dépôt métallique comprenant majoritairement du nickel s'étend principalement perpendiculairement à l'axe (12) du tube (20).

6. Composant d'assemblage selon la revendication 5, **caractérisé en ce qu'**il comprend, à proximité de la bride (14), une surépaisseur (21) disposée de façon à augmenter la section extérieure du corps (20) sans modifier la section intérieure du corps (20).

7. Composant d'assemblage selon la revendication 6, **caractérisé en ce que** la surépaisseur (21) appartient au corps (20) et comprend deux parties, dont une première partie (21b) s'étend dans le prolongement de la bride (14) et dont une seconde partie (21a) s'étend au-delà de la bride (14) le long de l'axe (12).

8. Procédé de réalisation d'un composant d'assemblage selon l'une des revendications 1 à 2, le composant d'assemblage étant selon l'une des revendications 3 à 7, **caractérisé en ce que** le soudage de la bride (14) sur le corps (20) est réalisé par friction malaxage.

9. Procédé selon la revendication 8, **caractérisé en ce que** pour réaliser le soudage par friction malaxage, un pion (25, 26) pénètre dans une interface entre la bride (14) et le corps (20) et **en ce qu'**avant d'extraire le pion (25, 26) de l'interface, on réalise une translation (29) du pion (25, 26) parallèlement à la surface (16) en s'éloignant du corps (20).

## Patentansprüche

1. Verfahren zum Herstellen eines Zusammenbauteils (10) für eine Vakuumkammer, wobei das Bauteil einen Körper (20) und einen Flansch (14) umfasst, wobei der Flansch eine Oberfläche (16) aufweist, die zum Pressen einer Dichtung (28) gegen ein anderes mechanisches Teil (10) konfiguriert ist, wobei der Flansch (14) die Form einer im Wesentlichen flachen Scheibe hat, die sich um eine Achse (12) erstreckt, wobei der Flansch zum Montieren an dem aus einer Aluminiumlegierung gefertigten Körper (20) konfiguriert ist, der um die Achse (12) herum rohrförmig ist, wobei sich der Körper (20) im Wesentlichen von der Oberfläche (16) entlang der Achse (12) über eine Dicke des Flanschs (14) hinaus erstreckt, wobei der Flansch (14) aus einer Aluminiumlegierung gefertigt ist, wobei der Flansch (14) und der Körper (20) zwei mechanische Teile bilden, die separat gefertigt und zum Montieren durch Schweißen konfiguriert sind, wobei der Flansch (14) einen in Bezug auf die Oberfläche (16) zurückgesetzten Bereich (34) umfasst, wobei der zurückgesetzte Bereich (34) das Schweißen des Körpers (20) ermöglicht, **dadurch gekennzeichnet, dass** die Oberfläche (16) mit einer Metallablagerung bedeckt ist, die überwiegend chemisch hergestelltes Nickel umfasst, wobei der zurückgesetzte Bereich (34) durch Entfernen von Material nach der Metallablagerung hergestellt wird, so dass der zurückgesetzte Bereich (34) frei von Metallablagerung ist.

2. Verfahren nach Anspruch 1, **dadurch gekennzeichnet, dass** die Metallablagerung zwischen 9 und 12 Masse-% Phosphor enthält.

3. Zusammenbauteil (10) einer Vakuumkammer, wobei das Bauteil einen Körper (20) und einen Flansch (14) umfasst, **dadurch gekennzeichnet, dass** der Körper und der Flansch nach dem Verfahren nach Anspruch 1 hergestellt werden.

4. Zusammenbauteil nach Anspruch 3, **dadurch gekennzeichnet, dass** der Flansch (14) und der Körper (20) aus Aluminiumlegierungen unterschiedlicher Referenzen gemäß der europäischen Norm EN 485-2 bestehen.

5. Zusammenbauteil nach einem der Ansprüche 3 oder 4, **dadurch gekennzeichnet, dass** der Körper (20) ein Rohr mit kreisförmigem Querschnitt ist, das sich entlang einer Achse (12) erstreckt, dadurch, dass der Flansch (14) die Form einer Scheibe hat, die im Wesentlichen am Außendurchmesser des Rohrs (20) durchbohrt ist, und dadurch, dass die Oberfläche (16) des Flanschs (14), die mit der Metallablagerung bedeckt ist, die überwiegend Nickel umfasst, sich vorwiegend senkrecht zur Achse (12) des Rohrs (20) erstreckt.

6. Zusammenbauteil nach Anspruch 5, **dadurch gekennzeichnet, dass** sie in der Nähe des Flanschs (14) eine Überdicke (21) umfasst, die so angeordnet ist, dass sie den Außenquerschnitt des Körpers (20) vergrößert, ohne den Innenquerschnitt des Körpers (20) zu verändern.

7. Zusammenbauteil nach Anspruch 6, **dadurch gekennzeichnet, dass** die Überdicke (21) zum Körper (20) gehört und zwei Teile umfasst, von denen ein erster Teil (21b) sich in der Verlängerung des Flanschs (14) erstreckt und ein zweiter Teil (21a) sich über den Flansch (14) hinaus entlang der Achse (12) erstreckt.

8. Verfahren zum Herstellen eines Zusammenbauteils nach einem der Ansprüche 1 bis 2, wobei das Zusammenbauteil wie in einem der Ansprüche 3 bis 7 definiert ist, **dadurch gekennzeichnet, dass** das Schweißen des Flanschs (14) an den Körper (20) durch Rührreibschweißen durchgeführt wird.

9. Verfahren nach Anspruch 8, **dadurch gekennzeichnet, dass** zur Durchführung des Rührreibschweißens ein Stift (25, 26) in eine Grenzfläche zwischen dem Flansch (14) und dem Körper (20) eindringt, und dadurch, dass vor dem Herausziehen des Stifts (25, 26) aus der Grenzfläche eine Translation (29) des Stifts (25, 26) parallel zur Oberfläche (16) vom Körper (20) weg durchgeführt wird.

## Claims

1. A method for producing an assembly component (10) for a vacuum chamber, the component comprising a body (20) and a flange (14), the flange having a surface (16) which is configured to press a seal (28) against another mechanical part (10), the flange (14) having a substantially flat washer shape extending about an axis (12), the flange being configured to be assembled on the body (20) made of an aluminium alloy and of tubular shape about the axis (12), the body (20) extending along the axis (12) substantially from the surface (16) beyond a thickness of the flange (14), the flange (14) being made of an aluminium alloy, the flange (14) and the body (20) forming two mechanical parts that are produced separately and configured to be joined together by welding, the flange (14) comprising a region (34) set back from the surface (16), the set-back region (34) allowing the welding of the body (20), **characterised in that** the surface (16) is covered with a metal deposit comprising mostly chemically produced nickel, the set-back region (34) being produced by removal of material following the metal deposit such that the set-back region (34) is devoid of metal deposit.

2. The method according to claim 1, **characterised in that** the metal deposit comprises between 9% and 12% by weight of phosphorus.

3. The assembly component (10) of a vacuum chamber, the component comprising a body (20) and a flange (14) **characterised in that** the body and the flange are produced according to the method of claim 1.

4. The assembly component according to claim 3, **characterised in that** the flange (14) and the body (20) are are made of aluminum alloys of different references according to the European standard EN 485-2.

5. The assembly component according to either of claim 3 or 4, **characterised in that** the body (20) is a tube of circular cross section extending along an axis (12), **in that** the flange (14) has a washer shape pierced substantially at the outside diameter of the tube (20), and **in that** the surface (16) of the flange (14) covered with the metal deposit mostly comprising nickel extends mainly perpendicularly to the axis (12) of the tube (20).

6. The assembly component according to claim 5, **characterised in that** it comprises, close to the flange (14), an overthickness (21) disposed so as to increase the exterior cross section of the body (20) without changing the interior cross section of the body (20).

7. The assembly component according to claim 5, **characterised in that** the overthickness (21) is part of the body (20) and comprises two parts, with a first part (21b) extending in continuation of the flange (14) and a second part (21b) extending beyond the flange (14) along the axis (12).

8. The method for producing an assembly component according to any one of claims 1 to 2, wherein the assembly component is in accordance with one of claims 3 to 7, **characterised in that** the welding of the flange (14) to the body (20) is carried out by friction stir welding.

9. The method according to claim 8, **characterised in that**, in order to carry out the friction stir welding, a pin (25, 26) passes into an interface between the flange (14) and the body (20), and **in that** before the pin (25, 26) is withdrawn from the interface, the pin (25, 26) is translated (29) parallel to the surface (16), away from the body (20).
